# EUROPÄISCHE PATENTSCHRIFT

(11) **EP 1 269 063 B1**
(45) Veröffentlichungstag und Bekanntmachung des Hinweises auf die Patenterteilung: **10.10.2012**
(21) Anmeldenummer: 01937966.8
(22) Anmeldetag: 04.04.2001
(51) Int. Cl.: F16L 27/08

(54) **DREHDURCHFÜHRUNG**
ROTARY JOINT
PASSAGE TOURNANT

(30) Priorität: 07.04.2000 DE 10017184
(43) Veröffentlichungstag der Anmeldung: 02.01.2003
(73) Patentinhaber: Georg Springmann Industrie- und Bergbautechnik GMBH, 45472 Mülheim an der Ruhr (DE)
(72) Erfinder: SPRINGMANN, Georg, 45472 Mülheim an der Ruhr (DE); WARMBIER, Dieter, 47441 Moers (DE); HASSELBRINK, Dirk, 47059 Duisburg (DE)
(74) Vertreter: Nobbe, Matthias
(86) Internationale Anmeldenummer: PCT/DE2001/001291
(87) Internationale Veröffentlichungsnummer: WO 2001/077566

(56) Entgegenhaltungen:
- DE-A- 19 605 797
- FR-A- 1 185 248
- US-A- 3 195 931
- US-A- 3 801 142

## Beschreibung

Die vorliegende Erfindung betrifft eine Vorrichtung mit den Merkmalen des Hauptanspruches.

Drehdurchführungen werden in unterschiedlichen Industriezweigen, insbesondere für Stranggußanlagen in der Stahlindustrie benötigt. Bei diesen Stranggußanlagen läuft der rotglühende Stahl in Strangform über Walzen, die außen in Lagern in Lagerböcken drehbar gelagert sind. Diese Walzen werden in einem geschlossenen Kreislauf durch die Zuführung von Wasser unter Druck in das Innere der Walzen zur Abführung der Wärme gekühlt. Mit der Drehdurchführung wird der Übergang von dem sogenannten Rotor und der daran angeflanschten Kühlwasserleitung zu dem an der Walze befestigten und sich damit mitdrehenden Gehäuse abgedichtet.

Im Stand der Technik sind hauptsächlich zwei verschiedene Arten von Drehdurchführungen bekannt. Eine erste Ausführungsform der Drehdurchführungen weist eine außerhalb des Walzeninneren liegende Baueinheit auf, die die Bauelemente für die notwendige Wasserzufuhr, Lagerung und Dichtung enthält. Bauartbedingt weisen derartige Anlagen mit solchen Drehdurchführungen eine erhebliche Breite rechts und links der Lagerböcke auf.

Zur Verminderung der Anlagenbreite sind daher seitens der Anlagenbauer Forderungen aufgestellt worden, Lagerung und dichtendes System in das Innere der Walze zu verlegen.

Zur Aufnahme der Drehdurchführung in der Walze ist eine Bohrung vorgesehen, in die die Drehdurchführung eingesteckt wird und dann beispielsweise über eine Verschraubung mit der Walze ortsfest verbunden wird. Das zur Kühlung verwendete Wasser wird unter einem Überdruck von bis zu 15 Atmosphären in die Drehdurchführung geleitet, und der auf die Bauelemente einwirkende Wasserdruck stellt zusammen mit der Bewegung derselben und der thermischen Beanspruchung erhebliche Anforderungen an die Abdichtungstechnik.

Eine verwendete Technik zur Abdichtung der sich bei Drehung der Walze in einer relativen Drehbewegung zueinander bewegenden Bauelemente der Drehdurchführung basiert auf der Verwendung einer Radialdichtung bestehend aus kreisförmigen O-Ringen oder Lippendichtungen aus Elastomer als dem maßgeblichen Dichtungselement.

Andere Techniken sind in der EP-A1-392.838 beschrieben. In dieser Druckschrift ist eine Drehdurchführung mit einer Dichtungsanordnung beschrieben, die durch den hydraulischen Druck der Flüssigkeit betätigt wird. Es handelt sich jedoch dabei um eine konstruktiv aufwendige Anordnung.

Den im Stand der Technik bekannten Drehdurchführungen ist gemeinsam, daß besonders bei radialen Belastungen der Walze infolge der relativ starren Wasserzu- und -abführungen Scherkräfte auf die Drehdurchführung wirken und einen starken Verschleiß der Drehdurchführung verursachen. Hinzu kommt die zumeist aufwendige mechanische Konstruktion der im Stand der Technik bekannten Drehdurchführungen.

Es ist daher eine Aufgabe der vorliegenden Erfindung, eine verschleißfeste Drehdurchführung bereitzustellen, die einen zuverlässigen Betrieb bei verlängerten Standzeiten ermöglicht, einen einfachen Aufbau besitzt und bei den im Einsatz befindlichen Stranggießanlagen ohne Umrüstung der Anlage selbst als Austauschbauteil verwendbar ist.

Die Aufgabe der Erfindung wird gelöst durch Bereitstellung einer Vorrichtung mit oder Merkmalen gemaß Anspruch 1

Die erfindungsgemäße Vorrichtung besitzt die Vorteile, daß sie einfach aufgebaut ist, eine erhöhte Verschleißfestigkeit und eine verringerte Störanfälligkeit besitzt und somit verlängerte Standzeiten ermöglicht. Die verwendeten Bauteile lassen sich bei Verschleiß einfach auswechseln.

Die erfindungsgemäße Vorrichtung weist dabei die auf der Walzenseite angeordnete Flanscheinheit aus Flansch mit einer daran druckdicht festgelegten elastischen Hülse, einem an der elastischen Hülse festgelegten und sich damit drehenden ersten Dichtelement, das eine erste Dichtfläche aufweist, als eine Bauteilgruppe der Drehdurchführung auf, wobei eine zweite Bauteilgruppe den Lagerbockdeckel mit dem zweiten Dichtelement mit der auf der ersten Dichtfläche ablaufenden zweiten Dichtfläche umfasst.

Der Lagerbockdeckel wird dabei an dem Lagerbock der Walze festgelegt, bevorzugt angeschraubt, und überdeckt/verschließt somit die Wälzlager und Walzenbohrung, wodurch die darin eingepasste Drehdurchführung vor Verschmutzung und Verschleiß geschützt wird.

In einer bevorzugten Ausführungsform ist in den Lagerbockdeckel ein Druckteller druckdicht eingepasst, der das zweite Dichtelement trägt. Weiter bevorzugt ist der Druckteller radial verschiebbar, gegebenenfalls federgestützt, angeordnet, so dass sich eine verbesserte Lagerung für den Druckteller ergibt.

Durch die Ausführung der senkrecht zur Drehachse aufeinander ablaufenden Dichtflächen der Dichtelemente wird eine erhöhte axiale Beweglichkeit der Dichtelemente der Drehdurchführung ermöglicht, was zu verringertem Verschleiß bei Belastung führt.

Obgleich die Dichtelemente auch durch aufeinander ablaufende Planflächen am Hülsenkopf und Lagerbockdeckel gebildet werden können, ist die Verwendung von zumindest einem in eine der Planflächen integrierten Gleitring als Dichtelement, die in der Regel aus Siliciumcarbid, Kohlegraphit oder ähnlichen Materialien bestehen, bevorzugt. Bei der Verwendung von zwei Gleitringen ist der eine dieser Gleitringe im ortsfesten Bauelement fest verankert, auf dessen Planfläche die Gegenplanfläche des anderen Gleitringes als rotierender Gegenring ablaufen kann.

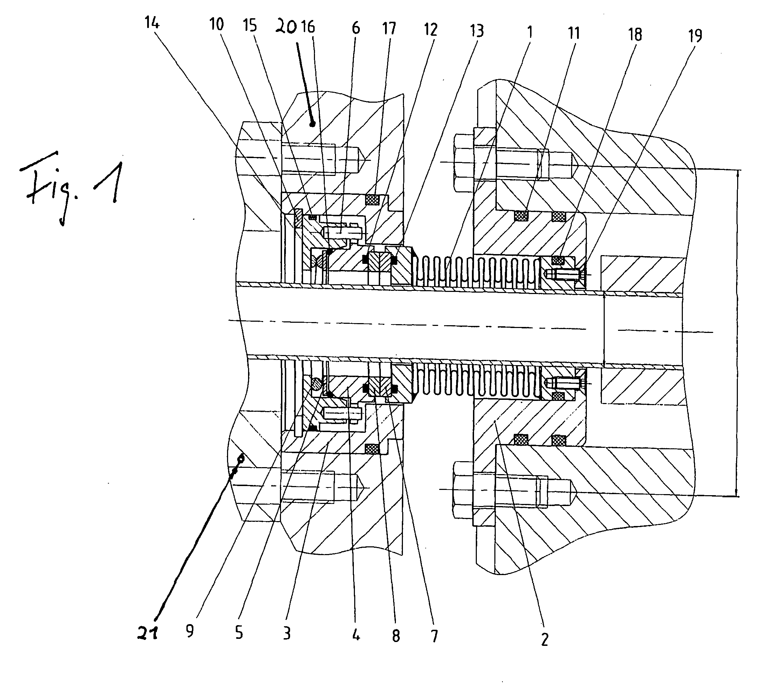

Ein Beispiel der Erfindung ist in der einzigen Fig. 1 dargestellt.

Wie in Figur 1 gezeigt, weist die erfindungsgemäße Vorrichtung als Bauelemente den Flansch 2 mit der daran festgelegten elastischen Hülse 1, das auf dem dem Flansch 2 abgewandten Ende der Hülse 1 angeordneten Gleitring als Dichtelement 7 und diesem entsprechend den Gleitring als Dichtelement 8 auf dem Druckteller 4 auf, wobei dieser Druckteller 4 über das Gehäuse 3 im Deckel der Drehdurchführung angeordnet ist. Der Druckteller 4 kann über die Spannstifte gegen ein Verdrehen gesichert und gegen das Gehäuse 3 über den O-Ring 16 abgedichtet sein. Ein Herausfallen des Drucktellers kann durch Einpressen des Drucktellers in den Deckel zum Abdecken der Walzenbohrung verhindert werden.

Die Gleitringe 7,8 können aus den im Stand der Technik bekannten Materialien gefertigt sein, bevorzugt ist jedoch aufgrund der Verschleißfestigkeit die Verwendung von Siliciumcarbid oder Elektrokohlegraphit.

Die verwendeten O-Ringe können aus den im Stand der Technik üblichen Materialien wie Gummi, Silikongummi usw. gefertigt sein.

Bei der in der Figur gezeigten Ausführungsform wird die in Form eines Kompensators ausgebildete elastische Hülse eingespannt zwischen Deckel und Hülsenfuß bzw. Flansch 2 gehalten. Hierbei wird eine Vorspannung und damit verbunden eine bessere Abdichtwirkung zwischen den Dichtflächen 7 und 8 erzielt.

In einer nicht dargestellten Ausführungsform ist die elastische Hülse in Form eines, gegebenenfalls mit Gewebe verstärkten Gummihohlzylinders ausgebildet, der zwischen Hülsenfuß und Hülsenkopf eingepasst ist. Bei dieser Ausführung wird eine besondere Flexibilität der Hülse ermöglicht und somit der Verschleiß der Drehdurchführung bei Belastung der Walze weiter vermindert.

In einer bevorzugten Ausführungsform ist die elastische Hülse 1 vom Flansch lösbar. In dieser Ausführung ist ein Austausch der elastischen Hülse 2 zur Einstellung einer den Dichtverhältnissen angepassten Vorspannung ebenso möglich wie eine Anpassung der Hülsenlänge an den jeweiligen Abstand zwischen Lagerbock und Lagerbockdeckel. So kann auf eine einfache Weise die Baulänge der Hülse verändert werden. In diesem Fall ist das dem Walzeninneren zugewandte Ende der Hülse 1 über den Hülsenfuß auf dem Flansch 2 mittels Schrauben 19 lösbar festgelegt und der Hülsenfuß gegen den Flansch 2 über den O-Ring 18 abgedichtet.

Die Wasserzu- oder einführung in das Innere der Walze wird über das die Drehdurchführung durchdringende Siphonrohr mit Anschlußarmatur 21 ermöglicht, das von außen durch den Deckel 20 zum Abdecken der Walzenbohrung eingeführt und an diesem außenseitig festgelegt wird.

Die erfindungsgemäße Vorrichtung lässt sich auf einfache Weise in die Bauteile zerlegen und somit ist ein schneller Austausch verschlissener Bauelemente möglich.

### Bezugszeichenliste

- 1: Metallbalg
- 2: Flansch
- 3: Gehäuse
- 4: Druckteller
- 5: Distanzring
- 6: Spannstift
- 7: Gleitring
- 8: Gleitring
- 9: Druckfeder
- 10: Sicherungsring
- 11: O-Ring
- 12: O-Ring
- 13: O-Ring
- 14: Drucktellergehäuse
- 15: O-Ring
- 16: O-Ring
- 17: O-Ring
- 18: O-Ring
- 19: Befestigungsschraube
- 20: Lagerbockdeckel zur Abdeckung der Wälzlager/Walzenbohrung
- 21: Siphonrohr mit Anschlußarmatur

## Patentansprüche

1. Vorrichtung zum Anschluss einer Kühlmittelzuführung einer Walze für eine Stranggiessanlage, die umfaßt:
einen Lagerbock, in dem eine Walze über Zapfen in Wälzlagern gelagert ist;
einen zur Abdeckung der Walzenbohrung und der Wälzlager an dem Lagerbock der Walze festlegbaren Lagerbockdeckel (20);
eine erste Bauteilgruppe, die eine auf der Walzenseite angeordnete Flanscheinheit aus einem in dem Walzenzapfen angeordneten Flansch (2) und einer daran druckdicht festgelegten elastischen Hülse (1), sowie ein auf der elastischen Hülse (1) festgelegtes und sich damit drehendes erstes Dichtelement (7), das eine erste Dichtfläche aufweist, aufweist; und
eine zweite Bauteilgruppe, die den Lagerbockdeckel (20), sowie ein zweites Dichtelement (8), das von dem Lagerbockdeckel (20) getragen wird oder in diesen integriert ist und eine zweite, auf der ersten Dichtfläche ablaufende zweite Dichtfläche aufweist, aufweist;
wobei eine die elastische Hülse (1) und den Lagerbockdeckel (20) durchdringende axiale Bohrung vorgesehen ist, die die Zuführung von Kühlmedium in das Innere der Walze ermöglicht, und
wobei die Dichtflächen der Dichtelemente (7,8) senkrecht zur Drehachse stehen.

2. Vorrichtung nach Anspruch 1, bei der das zweite Dichtelement (8) von einem in den Lagerbockdeckel (20) druckdicht eingepassten Druckteller (4) getragen wird, und die axiale Bohrung die elastische Hülse (1) und den Druckteller (4) durchdringt.

3. Vorrichtung nach Anspruch 2, bei der der Druckteller (4) im Lagerbockdeckel (20) radial verschiebbar, gegebenenfalls federgestützt, angeordnet ist.

4. Vorrichtung nach einem der Ansprüche 1 bis 3, bei der die elastische Hülse (1) am Flansch (2) lösbar festgelegt ist.

5. Vorrichtung nach einem der Ansprüche 1 bis 4, **dadurch gekennzeichnet, dass** die elastische Hülse (1) ein Kompensator ist.

6. Vorrichtung nach einem der Ansprüche 1 bis 5, **dadurch gekennzeichnet, dass** zumindest eines der ersten und zweiten Dichtelemente (7, 8) als Gleitring ausgebildet ist.

7. Vorrichtung nach Anspruch 6, **dadurch gekennzeichnet, dass** der Gleitring aus Elektrokohlegraphit oder Siliciumcarbid besteht.

## Claims

1. A device for connecting of a coolant feed to a roller of continuous casting plants, comprising:
a bearing block, in which a roller is mounted in roller bearings via journals;
a bearing block cover (20), being fixed to the bearing block of the roller to cover the roller borehole and the roller bearings.
a first component group, comprising a flange unit placed on the roller side having a flange (2), arranged in a roller journal, as well as an elastic sleeve (1), being coupled to said flange, and a first sealing element (7), having a first sealing surface, being coupled to said elastic sleeve (1) and being rotatable therewith; and
a second component group, comprising said bearing block cover (20) and a second sealing element (8) being supported or integrated by said bearing block cover (20) and having a second sealing surface running on said first sealing surface;
wherein an axial bore penetrating said elastic sleeve (1) and said bearing block cover (20) and permitting the feeding of coolant into the roller is provided;
wherein the sealing surfaces of the sealing elements (7, 8) are perpendicular to the rotational axis.

2. A device according to claim 1, wherein said second sealing element (8) is supported by a pressure plate (4), which is pressure-tightly fixed to the bearing bock cover (20), and said axial bore is penetrating said elastic sleeve (1) and said pressure plate (4).

3. A device according to claim 2, wherein said pressure plate (4) is arranged, optionally resiliently supported, movable in radial direction in the bearing bock cover (20).

4. A device according to any of claims 1-3, wherein said elastic sleeve (1) is removably fixed to said flange (2).

5. A device according to any of claims 1-4, **characterized in that** said elastic sleeve is a compensator.

6. A device according to any of claims 1-5, **characterized in that** at least one of said first and second sealing elements (7, 8) is a sliding ring.

7. A device according to claim 6, **characterized in that** said sliding ring is consisting of electro carbon graphite or silicon carbide.

## Revendications

1. Dispositif pour raccorder une alimentation en réfrigérant à un cylindre pour une installation de coulée continue, comprenant
un palier support, dans lequel un cylindre est monté par l'intermédiaire de tourillons dans des roulements ;
un couvercle de palier support (20), pouvant être fixé sur le palier support du cylindre pour recouvrir l'alésage du cylindre et les roulements ;
un premier sous-groupe, qui présente une unité de bride disposée du côté du cylindre et constituée d'une bride (2) disposée dans le tourillon de cylindre et d'un manchon élastique (1) fixé à la bride de manière étanche à la pression, ainsi qu'un premier élément d'étanchéité (7), qui est fixé sur le manchon élastique (1), tourne avec ce dernier et présente une première surface d'étanchéité ; et
un deuxième sous-groupe, qui présente le couvercle de palier support (20), ainsi qu'un deuxième élément d'étanchéité (8), qui est porté par le couvercle de palier support (20) ou est intégré dans ce dernier et qui présente une deuxième surface d'étanchéité s'étendant sur la première surface d'étanchéité ;
sachant qu'il est prévu un alésage axial qui traverse le manchon élastique (1) et le couvercle de palier support (20) et qui permet l'arrivée du réfrigérant à l'intérieur du cylindre, et
sachant que les surfaces d'étanchéité des éléments d'étanchéité (7, 8) sont perpendiculaires à l'axe de rotation.

2. Dispositif selon la revendication 1, dans lequel le deuxième élément d'étanchéité (8) est porté par un plateau de pression (4) encastré de manière étanche à la pression dans le couvercle de palier support (20), et l'alésage axial traverse le manchon élastique (1) et le plateau de pression (4).

3. Dispositif selon la revendication 2, dans lequel le plateau de pression (4) est disposé dans le couvercle de palier support (20) à translation radiale, éventuellement avec l'assistance d'un ressort.

4. Dispositif selon l'une des revendications 1 à 3, dans lequel le manchon élastique (1) est fixé à la bride (2) de manière amovible.

5. Dispositif selon l'une des revendications 1 à 4, **caractérisé en ce que** le manchon élastique (1) est un compensateur.

6. Dispositif selon l'une des revendications 1 à 5, **caractérisé en ce qu'**au moins un du premier et du deuxième éléments d'étanchéité (7, 8) est réalisé sous forme d'anneau de glissement.

7. Dispositif selon la revendication 6, **caractérisé en ce que** l'anneau de glissement est constitué de graphite ou de carbure de silicium.
